# EUROPEAN PATENT SPECIFICATION

(11) **EP 3 186 314 B1**
(45) Date of publication and mention of the grant of the patent: **12.08.2020**
(21) Application number: 15756171.3
(22) Date of filing: 31.08.2015
(51) Int. Cl.: C09D 4/06, C08K 3/00, C08K 5/00, C09D 133/06

(54) **MULTILAYER RADIATION-CURABLE COATING FOR INDOOR AND OUTDOOR APPLICATION**
MEHRSCHICHTIGE FARBIGE STRAHLUNGSHÄRTBARE BESCHICHTUNG ZUR INNEN- UND AUSSENAPPLIKATION
REVÊTEMENT MULTICOUCHE DURCISSABLE PAR RAYONNEMENT POUR APPLICATION INTÉRIEURE ET EXTÉRIEURE

(30) Priority: 29.08.2014 EP 14182882
(43) Date of publication of application: 05.07.2017
(73) Proprietor: Wijzovast Beheer B.V., 8041 AL Zwolle (NL)
(72) Inventor: VAN WIJHE, Marie Louise, NL-8024 PN Zwolle (NL); BROOKHUIS, Rainier, NL-7573 BJ Oldenzaal (NL); KLOCK, Wim, NL-8084 CJ t Harde (NL); VAN DER WAAL, Pieter Hendrik, NL-8024 CA Zwolle (NL); WALGIEN, Rolf, NL-8042 EX Zwolle (NL); FEIMA, Nico, NL-8017 AK Zwolle (NL); FIETEN, Bram, NL-3522 DE Utrecht (NL)
(74) Representative: Nederlandsch Octrooibureau
(86) International application number: PCT/EP2015/069840
(87) International publication number: WO 2016/030538

(56) References cited:
- WO-A1-2013/085400
- CN-A- 102 898 939
- US-A1- 2004 254 257
- US-A1- 2008 096 029
- US-B1- 6 231 931

## Description

### FIELD OF THE INVENTION

The present invention according to claims 1 to 8 relates to an improved process for coating substrates, using liquid solvent-free coating compositions that are curable by irradiation, especially with UV light, in particular to site-applied UV coatings. The present invention according to claims 9 to 12 relates to liquid UV-curable coating composition and finally in claims 13 to 18 it relates to a kit of parts and to a coated substrate.

### Background

UV curable coatings, or simply "UV coatings" are coatings for coating surfaces that are capable of being cured by UV irradiation. UV coating composition comprise resin and optional further additives, and a small amount of a photoinitiator that is able to initiate a photochemical reaction between molecules of the resin. As such, cross-links between the molecules of the resin are created and the coating hardens (curing). The photoinitiator (or simply initiator), typically a small molecule, forms radicals upon UV irradiation. These radicals initiate polymerisation reactions between the molecules of the resin, thus forming cross-links between the resin molecules in a photopolymerisation reaction. US 2012/0148833 describes a process wherein radiation curing is applied to coat concrete floors, wherein a primer coating composition comprises an acrylate resin having a functionality of at least 4 and a tertiary amine compound.

UV curable coatings have many advantages over conventional solvent-based coatings, as there is no solvent to evaporate, no emission of pollutants and thus no loss of volume of the coating layer. Cross-linking of resin molecules typically is several orders of magnitudes faster than conventional drying (waiting for the solvent to evaporate) or heat curing (cross-linking by application of heat) techniques. Since no evaporation of solvent or curing by heating is required, the energy consumption of UV-curable coatings is substantially lower as other types of coating. However, UV-curable coatings cannot be employed in all instances. Outdoor application of UV coatings (site application) remains a challenge in view UV radiation originating from the sun, adherence problems on outdoor materials such as concrete. Also the opaque coating of substrates using UV-curing is not yet readily available, since coloured coatings contain pigments that absorb UV light and thus interfere with the UV curing process. UV photons are absorbed by the pigment molecules before they can activate the photoinitiators, thus disabling the photopolymerisation cross-linking reactions. Adherence of UV-curable coatings to substrate that exhibit adherence problems, such as concrete, has been a challenge. Although some progress has been made in the above respects, no UV-curable opaque coatings that enable outside application of substrates that exhibit adherence problems are available to date. The present invention provides in this privation.

WO 2013/085400 discloses a process for coating a substrate using UV curable coating compositions, wherein layers up to 30 µm of thickness are applied. Such thin layers are unsuitable for site-applied coating. US 6 231 931, US 2004/254257, CN 102 898 939 and US 2008/096029 also relates further to coating or primer, solvent-free compositions.

### Summary of the invention

The invention relates to an advanced process for coating substrates with liquid UV-curable compositions, as well as liquid solvent-free UV-curable coating compositions, preferably primer and finisher coating compositions. Surprisingly, the inventors have found liquid UV-curable primer and finisher coating compositions that enable site application, in particular outside site application, even using substrates to which adherence is difficult, such as concrete substrates. Moreover, opaque (i.e. non-transparent) coating of a substrate is possible with the UV-curable coating compositions according to the invention. Such site-applied outside UV coating of concrete substrates using liquid solvent-free coatings has not been achieved in the art. Using the process according to the invention, the benefits of UV-curing (e.g. speed of application) and of liquid solvent-free coating compositions (e.g. no shrink, environmentally friendly) are combined for the first time in site-applied and opaque coating of substrates.

The process according to the invention comprises the following steps:
(a) applying a first layer of a liquid solvent-free UV-curable primer coating composition to a surface of the substrate;
(b) curing the first layer by irradiation with UV light;
(c) optionally applying and curing one or more further layers of a liquid solvent-free UV-curable coating composition on the cured first layer;
(d) providing granular material, having an average particle size in the range of 60 - 600 µm, to the coating;
(e) applying a final layer of a liquid solvent-free UV-curable finisher coating composition on the cured first or further layer;
(f) curing the final layer by irradiation with UV light,

Herein, the UV-curable coating compositions comprise 20 - 90 wt% UV-curable resin, 5 - 70 wt% filler, 0.1 - 10 wt% photoinitiator. Preferably, the coating compositions further comprise 0.1 - 5.0 wt% pigment. The coating compositions used in steps (a) and (e) may be the same, but preferably they are different. The coating compositions used in steps (a) and (c), if performed, may be different, but preferably they are the same. The coating composition used in step (c) is thus preferably a primer coating composition.

Furthermore, the coating compositions are solvent-free, or in other words the coating compositions do not contain substantial levels of any solvent, i.e. the solvent level is below 10 wt%, preferably below 5 wt%, even more preferably below 2 wt%, most preferably below 0.5 wt% of the total composition. A solvent herein includes any solvent, be it an organic solvent or an aqueous solvent. The skilled person appreciates which compounds are considered solvents. Typically, a solvent has to evaporate from the applied coating composition for proper curing of the applied coating layer, and is thus non-reactive towards curing treatments. Solvents generally have a boiling point below about 250 °C (at atmospheric pressure, determined according to GC ISO11890-2).

The invention thus also relates to liquid solvent-free UV-curable coating compositions comprising a pigment. The UV-curable coating compositions according to the invention comprise 20 - 90 wt% UV-curable resin, 0.1 - 10 wt% photoinitiator, 5 - 70 wt% filler and less than 5 wt% solvent, based on total weight of the composition, wherein the filler comprises rod-shaped granules having a length-to-diameter ratio of at least 1.5 and an average particle diameter of 10 - 200 micrometer.

In one embodiment, the UV-curable coating composition is a primer coating composition comprising 20 - 90 wt% UV-curable resin, 0.1 - 10 wt% photoinitiator, 5 - 70 wt% filler and preferably 0.5 - 5.0 wt% pigment. In a further embodiment, the UV-curable coating composition is a finisher coating composition comprising 20 - 90 wt% UV-curable resin, 0.1 - 10 wt% photoinitiator, 5-70 wt% filler and preferably 0.1 - 3.0 wt% pigment.

The major advantage associated with the present invention is that site-application, even outside site-application of substrates that exhibit adherence problems is achievable using liquid solvent-free UV coatings. Typical substrates that exhibit such adherence problems include concrete, in particular smooth concrete, linoleum, vinyl, plastic, fibre-reinforced-plastic, any type of stone such as rock or brick and metal surfaces, even stainless steel. It is believed that the specific combination of binder and filler ensures sufficient adherence to these challenging substrates, without negatively affecting the durability of the coating. The applied coatings exhibited a surprisingly high outside durability.

With the coating compositions according to a preferred embodiment of the invention, even opaque coverage of such substrates is achievable. Without being bound to a theory, it is envisioned that with the indicated amount of pigment, full opaque coverage is already possible in two layers, but the individual coating compositions are sufficiently transparent to enable UV curing. A further advantages associated with the process and coating compositions according to the invention is extremely swift curing. As such, the process according to the invention is particularly advantageous for the construction industry, for which UV-curable opaque coatings that may be applied outside were not available prior to the present invention. The use of pigments for opaque coating is preferred, as it offers the possibility of using fillers. Although fillers should be present in the coating compositions according to the invention, it is preferred that the filler is combined with a pigment.

### Detailed description

The invention relates to a process for coating of a substrate, using liquid solvent-free UV curable coating compositions. Herein, at least two layers of coating are applied to the substrate, one using a UV-curable primer coating composition and one using a UV-curable finisher coating composition. After the application of each layer, the coatings are cured by irradiation with UV light. According to a preferred embodiment, each coating composition comprises a specific amount of pigment in order to create an opaque coating on the substrate and at the same time not to hamper UV-curing. The primer coating composition and the finisher coating composition may be the same composition, but preferably they are distinct.

The invention thus relates to liquid solvent-free UV-curable coating compositions. The UV-curable coating composition according to the invention comprises 20 - 90 wt% UV-curable resin, 0.1 - 10 wt% photoinitiator, 5 - 70 wt% filler and less than 5 wt% of any solvent. The resin preferably is an amorphous resin. The filler is preferably present in an amount of 10 - 60 wt%, more preferably 20 - 50 wt%. The filler is preferably selected from wollastonite, calcite and mixtures thereof. The photoinitiator is preferably a phosphine oxide photoinitiator. Throughout the description, weight percentages (wt%) are given based on the total weight of the coating composition.

The coating compositions according to the invention preferably may comprise further additives, such as pigments, UV filters, light stabilizers, reactive diluents, deaerators, anti-settling agents, dispersing agents and surface additives, more preferably at least one, at least two, at least three or at least four additives selected from pigments, UV filters, light stabilizers, reactive diluents, deaerators, anti-settling agents, dispersing agents and surface additives. More preferably, the coating compositions further comprises a pigment, preferably 0.1 - 5.0 wt% pigment. The UV-curable coating compositions according to the inventions are liquid, i.e. they have a viscosity of 500 - 12,000 mPa.s, preferably 1000 - 10,000 mPa.s, more preferably 1500 - 5000 mPa.s, as determined by ISO3209. The UV-curable coating compositions according to the invention are solvent-free, i.e. the solvent level is below 10 wt%, preferably below 5 wt%, even more preferably below 2 wt%, most preferably below 0.5 wt% of the total composition. As appreciated by the skilled person, a substance is classified as a solvent in the field of coatings when evaporation thereof is needed to accomplish appropriate coating (e.g. drying of paint). Solvents include organic solvents and aqueous solvents (water). In one embodiment, the coating according to the invention does not comprise a tertiary amine. It was found that the presence of tertiary amines increase the extent of yellowing of the coating.

In one embodiment, the UV-curable coating composition is a primer coating composition comprising 20 - 90 wt% UV-curable resin, 0.1 - 10 wt% photoinitiator, 5 - 70 wt% filler and less than 5 wt% of any solvent, and preferably 0.5 - 5.0 wt% pigment. In a further embodiment, the UV-curable coating composition is a finisher coating composition comprising 20 - 90 wt% UV-curable resin, 0.1 - 10 wt% photoinitiator, 5 - 70 wt% filler and less than 5 wt% of any solvent, and preferably 0.1 - 3.0 wt% pigment. The resin used in the primer coating compositions should have sufficient adherence capacity to adhere to concrete. Polyester-modified acrylate resins are especially suited in this respect. The coating of the finisher composition should have optimal hardness and resistance to (household) chemicals.

### Primer coating composition

The primer coating composition may also be referred to as the "primer". The primer according to the invention comprises 20 - 90 wt% UV-curable resin, 0.1 - 10 wt% photoinitiator, 5 - 70 wt% filler and less than 5 wt% solvent.

Any resin known in the art that is suitable for UV-curable coatings may be used in the primer. The resin used in the primer may be a single resin or a mixture of resins, of which preferably at least one, more preferably at least two are polyester-modified acrylate resins. In view of the preferred application in the construction industry, it is preferred that the resin comprised in the primer is particularly suitable for adherence to concrete. The resin preferably is an amorphous resin, since the coating is preferably matt. Preferred resins include polyester-modified acrylate, urethane-modified acrylate resins and urethane resins. More preferably, a polyester resin is used, most preferably a polyester acrylate co-polymer resins. The average functionality, i.e. the number of cross-linkable double bonds, of the resin is preferably 2 - 5, more preferably 3 - 3.5. Higher functionalities are undesirable as that would impart a too great curing capacity on the primer resulting in undesirable shrinkage of the coating. Suitable resins are commercially available from Allnex, IGM or Sartomer (e.g. Ebecryl 893, Sartomer CN 203, Sartomer CN 2505 or Photomer 5429). The primer comprises 20 - 90 wt%, preferably 25 - 60 wt%, more preferably 30 - 50 wt%, most preferably 34 - 43 wt% of one or more of such resins.

Any photoinitiator known in the art that is suitable for UV-curable coatings may be used in the primer. Preferably, a photoinitiator that is capable of initiating polymerisation at relatively high wavelengths, e.g. up to 400 nm, is used, as a combination with UV filters and a broad range of pigments is thus possible. The photoinitiator used in the primer may be single photoinitiator or a mixture of photoinitiators, preferably a single photoinitiator is used. Phosphine oxide photoinitiators are preferred according to the invention. A preferred phosphine photoinitiator is bis(2,4,6-trimethylbenzoyl)phenylphosphine oxide, as it is activated at relatively high wavelengths, up to 400 nm. Photoinitiators containing bis(2,4,6-trimethylbenzoyl)phenylphosphine oxide are commercially available from e.g. BASF as Irgacure 819 or Irgacure 2100 or from Lamberti as Esacure KTO 46. Although the use of UV filters is especially preferred in the finisher according to the invention, it is a preferred embodiment that the primer and the finisher comprise the same photoinitiator, as both layers can thus be cured using the same UV source. The primer comprises 0.1 - 10 wt%, preferably 0.5 - 4.0 wt%, more preferably 1.0 - 2.0 wt% photoinitiator%, most preferably 1.6 - 1.8 wt%. The resin to photoinitiator weight ratio is preferably 5 - 250, more preferably 10 - 150, even more preferably 25 - 100, most preferably 50 - 90.

The primer according to the invention comprises a filler. A filler may be used to thicken the composition, support its structure and increase the volume of the composition in an inexpensive manner. Also, the use of fillers reduces shrink of the coating and reduces warping of the coated substrate and associated adherence problems. Thus, the presence of a filler renders the coating especially suitable for application on concrete. The primer comprises 5 - 70 wt%, preferably 10 - 60 wt%, more preferably 20 - 50 wt%, even more preferably 44 - 48 wt% filler. The resin to filler weight ratio is preferably 0.4 - 10, more preferably 0.6 - 2.5, most preferably 0.7 - 1.0.

Any type of filler compatible with UV curing may be employed. Typically, the filler is a mineral material, such as diatomaceous earth, talc, lime, barites, clay, quartz, calcium silicates (e.g. CaSiO₃ (wollastonite)) and calcium carbonates (e.g. calcite). Preferred fillers are selected from calcium silicates, calcium carbonates and mixtures thereof; more preferably wollastonite, calcite or a mixture thereof, even more preferably at least wollastonite is used, most preferably a mixture of wollastonite and calcite is used.

Alternatively, it is preferred that the filler is a powder comprising rod-shaped particles. Such rod-shaped particles typically have a length-to-diameter ratio (aspect ratio) of at least 1.5, preferably 3 - 20 and an average particle size (sieve fraction) of 10 - 60 µm, preferably 20 - 40 µm. Without being bound to a theory, it is believed that such rod-shaped particles used as filler increase the strength and (outside) durability of the coating layer after curing, as the rods act as fibres reinforcing the coating much like what happens in composite materials. Using such rod-shapes particles as filler has been found by the inventors to reduce the extent of wrinkling and zippering in the applied coating layer. It is believed that in view of the one-dimensional nature of the particles, any shrink that may occur during or after curing, occurs mainly in one direction, typically the z-direction (perpendicular to the plane of the coating). The low extent of shrink in the x- and y-directions (in the plane of the coating) prevents significant amounts of total shrink and associated adherence problems. The use of at least wollastonite as a filler is especially preferred in this respect, since wollastonite typically occurs as such rod-shaped particles. Suitable rod-shaped fillers are available from Casiflux (e.g. F75, G20 or G38) and Nordkalk (e.g. FW200, FW325, FW400).

The primer according to the invention preferably may comprise further additives, such as pigments, UV filters, light stabilizers, reactive diluents, deaerators, anti-settling agents, dispersing agents and surface additives, more preferably at least one, at least two, at least three or at least four additive selected from pigments, UV filters, light stabilizers, reactive diluents, deaerators, anti-settling agents, dispersing agents and surface additives. Preferably, the primer composition consists of resin, photoinitiator, filler and optionally further additives selected from pigments, UV filters, light stabilizers, reactive diluents, deaerators, anti-settling agents, dispersing agents and surface additives. More preferably, the finisher composition consists of resin, photoinitiator, filler, pigments, reactive diluent, deaerator, anti-settling agent.

The primer preferably comprises a pigment. The presence of a pigment ensures that the primer-coated surface of the substrate is at least partially opaque, which enables full coverage after application of the finisher coating. As such, sufficient pigment should be present to obtain a fully covered substrate after application of two layers, but at the same time, the amount of pigment may not be too high that problems may arise during UV curing. Pigments absorb significant amounts of light, including UV light, which may hamper curing as less light is available to initiate the photopolymerisation. In particular, problems associated with too high pigment concentration may arise deeper into the coating layer, where adherence with the substrate occurs, as most of the UV photons are absorbed by pigment molecules closer to the surface where irradiation takes place. The primer coating composition according to the invention avoids any adherence problems. Even adherence to concrete is readily accomplished with the primer according to the invention.

Typically, the primer coating composition contains 0.2 - 5.0 wt% pigment, preferably 0.5 - 3.0 wt% pigment, more preferably 0.75 - 2.0 wt%, even more preferably 0.9 - 1.5 wt% pigment. The pigment may be a single pigment or a mixture of two or more pigments that together make up the desired colour. In the context of the present invention, the term "pigment" refers to the total pigment in the coating compositions. The wt% values are thus for the total content of pigment in the primer. Any pigment or mixture of pigments as known in the art may be used in the primer according to the invention.

The skilled person appreciates that the pigment should be adapted to the desired colour. Any type of pigment is suitable, such as those given in the pigment database on http://www.artiscreation.com. Preferably, a pigment is used that gives the least amount of interference with the UV curing. It is thus preferred that the pigment has low absorption at the wavelength of the UV used to cure the primer. This wavelength is determined by the photoinitiator, which requires a certain wavelength in order to break down in radicals. Preferably, the pigment and the photoinitiator are selected as such that the absorption spectrum of the pigment shows a minimum at or near the emission wavelength(s) of the UV source. As the process according to the invention preferably employs a mercury vapour lamp as UV source, the pigment preferably has low extinction coefficient around 365 nm.

The resin to pigment weight ratio is preferably 5 - 200, more preferably 10 - 100, even more preferably 25 - 75, most preferably 35 - 55. In a preferred embodiment, the pigment is orange, white, black or a mixture thereof, more preferably white, black or a mixture thereof, most preferably a mixture of white and black, giving rise to grey coatings of varying shades. Titanium oxide is particularly suitable as a white pigment, and the black pigment preferably is a carbon black or a metallic black such as iron black. TiO₂ pigments are e.g. commercially available as Ti Pure R-960, Kronos 2190, Kronos 2360 and Sachtleben RD3, while Printex G (Degussa), Bayferrox 318M, Ferroxide 78P (Rockwood) are suitable as black pigment. The weight ratio of white pigment to black pigment preferably is 50/50 - 99/1, more preferably in a weight ratio of 70/25 - 90/10, even more preferably in a weight ratio of 83/17 - 88/13, most preferably about 85/15. Coating compositions comprising pigments are especially difficult to cure using UV-curing, as black pigments particularly inhibit UV light penetration and white pigments reflect UV light. However, using the process according to the invention, UV curing of white and black pigments is readily achievable, in view of the relatively low pigment content per layer of coating composition.

Preferably, the primer according to the invention comprises a anti-settling agent. An anti-settling agent reduces the occurrence of sagging. Any type of anti-settling agent as known in the art may be employed. Preferably, the anti-settling agent is silica-based, preferably with a particle size (mass-median diameter) of 2 - 25 µm, more preferably 5 - 20 µm, and the BET surface area is preferably 20 - 400 m²/g, more preferably 50 - 300 m²/g. Preferred anti-settling agents comprise synthetic, preferably amorphous, silica. The silica content is preferably at least 50 wt%, based on total weight of the anti-settling agent, more preferably at least 70 wt%. Suitable anti-settling agents are commercially available, such as Gasil 23F, Syloid RAD 2005, Acematt TS100 and Wacker HDK H28, as they also exhibit matting properties, i.e. it reduces the gloss of the coating and may impart resistance to (household) chemicals. The primer preferably comprises 0.1 - 2.5 wt%, more preferably 0.5 - 1.5 wt%, even more preferably 0.8 - 1.25 wt% even more preferably 0.85 - 1.1 wt% anti-settling agent.

Preferably, the primer according to the invention comprises a reactive diluent. Such a diluent reduces the viscosity of the coating composition, which is therefore more easily applied to the substrate. In addition, the presence of reactive diluents may impart improved adhesion to the substrate. Any type of reactive diluent compatible with UV curing may be employed. Reactive diluents are known in the art to be organic compounds which are at least partly miscible with the other components of the composition, and which preferably have at least one polymerisable double bond, and preferably have a molecular weight above about 150 g/mol or even 180 g/mol, up to e.g. 500 g/mol. Contrary to solvents, reactive diluents are not removed from the coating compositions, and ultimately form part of the polymer structure.

Preferred reactive diluents are selected from acrylates, especially mono-acrylates such as alkyl (e.g. octyl/decyl acrylate), alkoxyalkyl, aryl-alkyl, aryloxyalkyl, alkylaryl acrylates and ethoxylated forms thereof (e.g. nonylphenol [4EO] acrylate) as well as isobornyl acrylate. Suitable reactive diluents are commercially available, and include Ebecryl 114, Photomer 4003, IBOA and ODA-N. The skilled person will understand that the viscosity of the primer, and thus the reactive diluent content, may vary depending on the specific situation (e.g. type of substrate, environment temperature, substrate temperature, accessibility of the substrate to be coated, type of application). Typically, the primer comprises 1.0 - 40 wt%, preferably 5.0 - 25 wt%, more preferably 7.0 - 20 wt% even more preferably 8.0 - 16 wt% of one or more reactive diluents.

Preferably, the primer according to the invention comprises a deaerator. A deaerator prevents the formation of air bubbles in the coating composition. Air bubbles prevent the formation of uniform layers. A deaerator may also be referred to as a defoamer. Any type of deaerator compatible with UV curing may be employed. Suitable deaerator include Tego Airex 910, 920 and 990, Byk 1791 and EFKA PB 2010. Preferably, EFKA PB 2010 or Byk 1791 is used. It is preferred that the deaerator is an organic silicone-free polymer. The primer preferably comprises 0.05 - 1.5 wt%, more preferably 0.1 - 0.5 wt%, most preferably 0.15 -0.4 wt%, even more preferably 0.18 - 0.35 wt% deaerator.

A preferred primer coating composition according to the invention comprises:
(a) 20 - 90 wt%, preferably 25 - 60 wt%, more preferably 30 - 50 wt%, most preferably 34 - 43 wt% UV-curable resin, said resin preferably being a polyester resin, more preferably being a polyester acrylate;
(b) 0.1 - 10 wt%, preferably 0.5 - 4.0 wt%, more preferably 1.0 - 2.0 wt%, most preferably 1.6 - 1.8 wt% photoinitiator, said photoinitiator preferably being a phosphine oxide photoinitiator, more preferably bis(2,4,6-trimethylbenzoyl)-phenylphosphine oxide;
(c) preferably 0.2 - 5.0 wt%, more preferably 0.5 - 3.0 wt%, even more preferably 0.75 - 2.0 wt%, most preferably 0.9 - 1.5 wt% pigment, said pigment preferably being orange pigment, grey pigment or a mixture of white and black pigment, more preferably a mixture of white and black pigment in a weight ratio of 50/50 - 99/1, even more preferably in a weight ratio of 70/25 - 90/10, most preferably in a weight ratio of 83/17 - 88/13;
(d) 5 - 70 wt%, preferably 10 - 60 wt%, more preferably 20 - 50 wt%, most preferably 44 - 48 wt% filler, said filler preferably being wollastonite, calcite or a mixture thereof, more preferably the filler comprises at least wollastonite;
(e) preferably 0.1 - 2.5 wt%, more preferably 0.5 - 1.5 wt%, even more preferably 0.8 - 1.25 wt%, most preferably 0.85 - 1.1 wt% anti-settling agent, said anti-settling agent preferably being silica-based;
(f) preferably 1.0 - 40 wt%, more preferably 5.0 - 25 wt%, even more preferably 7.0 - 20 wt%, most preferably 8.0 - 16 wt% reactive diluent, preferably said reactive diluent being nonylphenol [4EO] acrylate; and
(g) preferably 0.05 - 1.5 wt%, more preferably 0.1 - 0.5 wt%, even more preferably 0.15 - 0.4 wt%, most preferably 0.18 - 0.35 wt% deaerator.

### Finisher coating composition

The finisher coating composition may also be referred to as the "finisher". The finisher according to the invention comprises 20 - 90 wt% UV-curable acrylate resin, 0.1 - 10 wt% photoinitiator, 5 - 70 wt% filler and less than 5 wt% solvent.

Any acrylate resin known in the art that is suitable for UV-curable coatings may be used in the finisher. The use of acrylate resins imparts superior characteristics to the final coating. When compared with for example widely used epoxy resins, acrylate resins have greatly improved outside durability, e.g. they show a reduced yellowing and gloss reduction upon prolonged outside existence. The resin used in the finisher may be a single resin or a mixture of resins. In view of the application in the construction industry, it is preferred that the resin comprised in the finisher is particularly suitable for adherence to concrete when combined with the resin comprised in the primer according to the invention. Further preferred characteristics of the resin comprised in the finisher resistance to mechanical forces and chemicals. The resin preferably is an amorphous resin, since the coating is preferably matt.

Preferred resins include acrylate co-polymer resins, such as polyester acrylate resins and urethane acrylate resins, more preferably a urethane acrylate resin is used in the finisher. It is preferred that a mixture of two resins is used, preferably both are urethane acrylate resins. The average functionality of the resin is preferably 2 - 8, more preferably 3 - 6.5. An increased functionality with respect to the resin used in the primer is desirable, as that imparts greater resistance and (outside) durability to the coating. Suitable resins to be used in the finisher are commercially available from Allnex, Sartomer or IGM and include Ebecryl 1290, Ebecryl 4820, Ebecryl 5129, Ebecryl 8254, Ebecryl 8405, Ebecryl 8465, Ebecryl 8701, Sartomer CN 989, Sartomer CN 9210, Photomer 6891, Photomer 6892 and Photomer 6690. Preferably a mixture of at least two of the above resins is used, more preferably two of the above resins, even more preferably a mixture of (a) a resin selected from Ebecryl 4820, Ebecryl 8405, Ebecryl 8465, Ebecryl 8701, Sartomer CN 989, Photomer 6891 and Photomer 6892; and (b) a resin selected from Ebecryl 1290, Ebecryl 5129, Ebecryl 8254, Sartomer CN 9210 and Photomer 6690, most preferably the mixture is in a weight ratio (a)/(b) of 5/1 - 2/1. The finisher comprises 20 - 90 wt%, preferably 23 - 55 wt%, more preferably 25 - 40 wt%, even more preferably 28 - 32 wt% UV-curable resin.

Any photoinitiator known in the art that is suitable for UV-curable coatings may be used in the finisher. Preferably, a photoinitiator that is capable of initiating polymerisation at relatively high wavelengths, e.g. up to 400 nm, is used, as a combination with UV filters and a broad range of pigments is thus possible. The use of UV filters is preferred in the finisher according to the invention, as described below, in particular when the process according to the invention is for opaque coating of a substrate. UV filters increase the durability and colour fastness (resistance to fading) of the applied coating. The photoinitiator used in the finisher may be single photoinitiator or a mixture of photoinitiators, preferably a mixture of photoinitiators is used. Preferred photoinitiators are phosphine oxide photoinitiators, preferably bis(2,4,6-trimethylbenzoyl)-phenylphosphine oxide is used, as it is activated at relatively high wavelengths, up to 400 nm. Suitable photoinitiators are available as Irgacure 819, Irgacure 2100 or Esacure KTO 46.

According to a preferred embodiment, the primer and the finisher coating compositions according to the invention comprise the same photoinitiator, as both layers can thus be cured using the same UV source. It is also preferred that the finisher comprises a greater content of photoinitiator, as the inventors have found that a smaller extent of curing for the primer coating composition (i.e. in step (b)) suffices for optimal results, but that a greater extent of curing is preferred for the finisher coating composition (i.e. in step (f)). Thus, it is preferred that the photoinitiator content in the finisher is a factor 1.5 - 20, more preferably a factor 2 - 10, most preferably a factor 3 - 6 greater than the photoinitiator content in the primer. Suitably, the photoinitiator as used in the primer is present in the finisher in about the same amount, and a further photoinitiator is added to the finisher composition. A preferred further photoinitiator is methyl benzoylformate. Suitable further photoinitiators are available from IGM (e.g. Omnirad MBF) or BASF (e.g. Irgacure MBF, Irgacure 754). Thus, the finisher preferably comprises a mixture of a phosphine oxide photoinitiator and methyl benzoylformate, more preferably of bis(2,4,6-trimethylbenzoyl)-phenylphosphine oxide and methyl benzoylformate. The finisher comprises 0.1 - 15 wt%, preferably 1.0 - 12 wt%, more preferably 4.0 - 10 wt%, even more preferably 7.0 - 8.5 wt% photoinitiator. The resin to photoinitiator weight ratio is preferably 2 - 100, more preferably 2.5 - 20, even more preferably 3 - 10, most preferably 3.5 - 4.

The finisher according to the invention further comprises a filler as described above for the filler of the primer composition. Within this description, the filler of the finisher may be the same as or different from the filler of the primer. Most preferably, at least wollastonite is used as a filler of the finisher. The finisher comprises 5 - 70 wt%, preferably 10 - 60 wt%, more preferably 20 - 50 wt%, even more preferably 38 - 42 wt%, most preferably about 40 wt% filler. The resin to filler weight ratio is preferably 0.4 - 10, more preferably 0.6 - 2.5, most preferably 0.7 - 1.0.

The finisher according to the invention preferably may comprise further additives as described above for the primer composition, such as pigments, UV filters, light stabilizers, reactive diluents, deaerators, anti-settling agents, dispersing agents and surface additives, more preferably at least one, at least two, at least three or at least four of such additives Preferably, the finisher composition consists of resin, photoinitiator, filler and optionally further additives selected from pigments, UV filters, light stabilizers, reactive diluents, deaerators, anti-settling agents, dispersing agents and surface additives. More preferably, the finisher composition consists of resin, photoinitiator, filler, pigment, UV filter, light stabilizer, reactive diluent, deaerator, anti-settling agent, dispersing agent and surface additive.

The finisher preferably further comprises a pigment, which may be the same as or different from the pigment(s) of the primer composition, preferably the same. The presence of a pigment enables opaque coating of the substrate. A fully opaque coating is obtainable by a minor amount of pigment in the primer and a minor amount of pigment in the finisher. Typically, the finisher coating composition contains 0.1 - 2.5 wt% pigment, preferably 0.5 - 2.0 wt% pigment, more preferably 0.8 - 1.4 wt%, even more preferably 0.9 - 1.1 wt% pigment. The pigment may be a single pigment or a mixture of two or more pigments that together make up the desired colour. The wt% values are for the total content of pigment in the finisher. Any pigment or mixture of pigments as known in the art may be used in the finisher according to the invention. In the context of the present invention, the term "pigment" refers to the total pigment in the coating compositions. The skilled person appreciates that the pigment, especially the pigment of the finishing composition, should be adapted to the desired colour. Any type of pigment is suitable, such as those given in the pigment database on http://www.artiscreation.com. Preferably, a pigment is used that gives the least amount of interference with the UV curing as explained above for the pigment comprised in the primer. The resin to pigment weight ratio is preferably 5 - 200, more preferably 10 - 100, most preferably 15 - 50. In a preferred embodiment, the pigment of the finisher is orange, white, black or a mixture thereof, more preferably white, black or a mixture thereof, most preferably a mixture of white and black, giving rise to various shades of grey. Titanium oxide is particularly suitable as white pigment, and the black pigment preferably is a carbon black or a metallic black such as iron black. TiO₂ pigments are e.g. commercially available as Ti Pure R-960, Kronos 2190, Kronos 2360 and Sachtleben RD3, while Printex G (Degussa), Bayferrox 318M, Ferroxide 78P (Rockwood) are suitable as black pigment. The weight ratio of white pigment to black pigment preferably is 50/50 - 99/1, more preferably in a weight ratio of 70/25 - 95/5, even more preferably in a weight ratio of 77/23 - 90/10. Including a slightly lower amount of black pigment in the finisher, compared to the primer, ensures that the finisher is sufficiently cured to obtain optimal (outside) durability of the coating.

Preferably, the finisher according to the invention comprises a UV filter. When one or more UV filters are employed in the finisher according to the invention, it is important that they do not interfere with the UV curing step. As such, it is required that the UV filter does not block the wavelength used during curing, i.e. the threshold wavelength (upper absorption wavelength) of the UV filter is below the emission wavelength of the UV source. UV filters protect the coating layer and the substrate underneath from degradation and (photo)oxidation ad thus reduces yellowing, blistering and loss of adhesion. Any type of UV filter as known in the art may be employed. Preferably, the UV filter comprises a 2-hydroxyphenyl-benzophenone, a 2-(2-hydroxyphenyl)benzotriazole or 2-hydroxyphenyl-s-triazine moiety, more preferably a 2-hydroxyphenyl-s-triazine moiety. Most preferably, the UV filter is 2-hydroxyphenyl-s-triazine. The finisher preferably comprises 0. 05 - 5.0 wt%, more preferably 0.2 - 2.5 wt%, even more preferably 0.5 - 1.5 wt% even more preferably 0.95 - 1.05 wt% UV filter.

Preferably, the finisher according to the invention comprises an anti-settling agent as described above for the primer composition The finisher preferably comprises 0.1 - 2.5 wt%, more preferably 0.5 - 1.5 wt%, even more preferably 0.9 - 1.2 wt% even more preferably 0.97 - 1.03 wt% anti-settling agent.

Preferably, the finisher according to the invention comprises a reactive diluent. Any type of reactive diluent compatible with UV curing as known in the art may be employed. Preferred reactive diluent are selected from acrylates, especially diacrylates and/or triacrylates, more preferably a mixture of a diacrylate and a triacrylate is used as reactive diluent. Preferred diacrylates include hexanediol diacrylate (HDDA), tripropylene glycol diacrylate (TPGDA) and dipropylene glycol diacrylate (DPGDA), most preferably the diacrylate is TPGDA. Preferred triacrylates include trimethylolpropane ethoxylate triacrylate (TMPET; available under CAS no. 28961-43-5), trimethylolpropane triacrylate (TMPTA) and oligotriacrylate 480 (OTA-480), most preferably the triacrylate is TMPTA. Most preferably the reactive diluent is a mixture of TPGDA and TMPTA. Preferably, the weight ratio of diacrylate to triacrylate is 50/50 - 65/35, preferably 55/45 - 60/40. The skilled person will understand that the viscosity of the finisher, and thus the reactive diluent content, may vary depending on the specific situation (e.g. type of substrate, environment temperature, substrate temperature, accessibility of the substrate to be coated, type of application). Typically, the finisher comprises 5.0 - 40 wt%, preferably 10 - 25 wt%, more preferably 15 - 20 wt%, even more preferably 17.5 - 18.5 wt% reactive diluent.

Preferably, the finisher according to the invention comprises a deaerator as described above for the primer composition. The finisher preferably comprises 0.05 - 1.5 wt%, more preferably 0.1 - 1.0 wt%, even more preferably 0.15 -0.5 wt%, even more preferably 0.18 - 0.32 wt% deaerator.

Preferably, the finisher according to the invention comprises a dispersing agent. A dispersing agent prevents aggregation of pigment molecules and ensures homogeneous distribution thereof throughout the coating composition, as such enabling uniformly coloured coatings. Any type of dispersing agent compatible with UV curing may be employed. Preferably, the dispersing agent also acts as wetting agent. Suitable dispersing agents are commercially available, and include Disperbyk 111, Dispex Ultra FA4431 and Anti-Terra-250. It is preferred that the dispersing agent is an acid-functional polymer, more preferably an aliphatic polyether comprising acidic groups. The finisher preferably comprises 0.01 - 1.5 wt%, more preferably 0.1 - 1.0 wt%, most preferably 0.15 -0.5 wt%, even more preferably 0.20 - 0.35 wt% dispersing agent.

Preferably, the finisher according to the invention comprises a light stabilizer. A light stabilizer protects the coating from degradation or weathering and thus prevents rapid aging. Any type of light stabilizer compatible with UV curing may be employed, although sterically hindered amine light stabilizers (HALS) are preferred. Preferred light stabilizers comprise a 1,2,2,6,6-pentamethyl-4-piperidine moiety, more preferably a (1,2,2,6,6-pentamethyl-4-piperidinyl)-sebacate moiety, even more preferably said light stabilizer is a mixture of bis(1,2,2,6,6-pentamethyl-4-piperidinyl)-sebacate and 1-(methyl)-8-(1,2,2,6,6-pentamethyl-4-piperidinyl)-sebacate. Suitable light stabilizers are commercially available and include Tinuvin 123, 144, 292, 662SF and 770DF, Uvasorb HA 700 and 88FD, HALS 944 and 3346, light stabilizer 2020, ADK stab 57, LA 402 AF and LA 502 XP and Lowilite 19, 62, 6294, 77 and 9974. The finisher preferably comprises 0.01 - 1.5 wt%, more preferably 0.1 - 1.0 wt%, most preferably 0.2 -0.5 wt%, even more preferably 0.22 - 0.32 wt% light stabilizer.

Preferably, the finisher according to the invention comprises a surface additive. A surface additive increases the surface tension of the coating composition, which facilitates application of the coating composition to the substrate or to a prior applied layer of primer. Any type of surface additive compatible with UV curing may be employed. Preferred surface additives are silicone-containing surface additives, more preferably polydimethylsiloxanes, most preferably polyether-modified polydimethylsiloxanes. A suitable surface additives is commercially available as Byk-UV 3500, Byk-333, byk-378, Hydropalat WE3240 and WE3110. The finisher preferably comprises 0.01 - 1.5 wt%, more preferably 0.05 - 1.0 wt%, most preferably 0.08 - 0.3 wt%, even more preferably 0.095 - 0.15 wt% surface additive.

In a particularly preferred embodiment, the finisher coating composition comprises a granular material preferably having an average particle size in the range of 60 - 600 µm, more preferably in the range of 0.05 - 0.2 mm, most preferably 0.06 - 0.2 mm, which can then be used for step (d) of the process according to the invention. When the granular material is contained in a coating composition according to the invention, preferably the finisher coating composition, it is preferably present in 5 - 30 wt%, more preferably 10 - 25 wt%, most preferably 13 - 17 wt%, based on total weight of the coating composition. It should be noted that in case the finisher composition comprises granular material, the wt% values of other components given herein are based on the coating composition without granular material. Preferably, the granular material is selected from sand and other mineral materials, glass, thermoplastics (e.g. PP and/or PE), wood (e.g. chips), silicon carbide, more preferably a mineral material is used, most preferably sand. Most preferably Geba sand, Silvers and M32 or Dorsilit nr.9 is used.

A preferred finisher coating composition according to the invention comprises, more preferably consists of:
(a) 20 - 90 wt%, preferably 23 - 55 wt%, more preferably 25 - 40 wt%, most preferably 28 - 32 wt% UV-curable acrylate resin, said resin preferably being acrylate co-polymer resin, more preferably urethane acrylate co-polymer resin;
(b) 0.1 - 15 wt%, preferably 1.0 - 12 wt%, more preferably 4.0 - 10 wt%, most preferably 7.0 - 8.5 wt% photoinitiator, said photoinitiator preferably being a phosphine oxide, methyl benzoylformate or a mixture thereof, more preferably bis(2,4,6-trimethylbenzoyl)-phenylphosphine oxide, methyl benzoylformate or a mixture thereof, most preferably a mixture thereof;
(c) preferably 0.1 - 2.5 wt%, more preferably 0.5 - 2.0 wt%, even more preferably 0.8 - 1.4 wt%, most preferably 0.9 - 1.1 wt% pigment, said pigment preferably being orange pigment, grey pigment or a mixture of white and black pigment, more preferably a mixture of white and black pigment in a weight ratio of 50/50 - 99/1, even more preferably in a weight ratio of 70/25 - 95/5, most preferably in a weight ratio of 77/23 - 90/10;
(d) 5 - 70 wt%, preferably 10 - 60 wt%, even more preferably 20 - 50 wt% most preferably 38 - 42 wt% filler, said filler preferably being a calcium silicate, more preferably the filler is CaSiO₃ (wollastonite);
(e) preferably 0.1 - 2.5 wt%, more preferably 0.5 - 1.5 wt%, even more preferably 0.9 - 1.2 wt% most preferably 0.97 - 1.03 wt% anti-settling agent;
(f) preferably 5.0 - 40 wt%, more preferably 10 - 25 wt%, even more preferably 15 - 20 wt% most preferably 17.5 - 18.5 wt% reactive diluent, said reactive diluent preferably being an acrylate, more preferably a mixture of diacrylate and triacrylte, most preferably the reactive diluent is a mixture of TPGDA and TMPTA;
(g) preferably 0.05 - 1.5 wt%, more preferably 0.1 - 1.0 wt%, even more preferably 0.15 -0.5 wt%, most preferably 0.18 - 0.32 wt% deaerator;
(h) preferably 0.05 - 5.0 wt%, more preferably 0.2 - 2.5 wt%, even more preferably 0.5 - 1.5 wt% most preferably 0.95 - 1.05 wt% UV filter, said UV filter preferably being 2-hydroxyphenyl-triazine;
(i) preferably 0.01 - 1.5 wt%, more preferably 0.1 - 1.0 wt%, even more preferably 0.15 -0.5 wt% most preferably 0.20 - 0.25 wt% dispersing agent, said dispersing agent preferably being acid-functional;
(j) preferably 0.01 - 1.5 wt%, more preferably 0.1 - 1.0 wt%, even more preferably 0.2 -0.5 wt% most preferably 0.22 - 0.32 wt% light stabilizer, said light stabilizer preferably comprising a 1,2,2,6,6-pentamethyl-4-piperidine moiety, more preferably a (1,2,2,6,6-pentamethyl-4-piperidyl)-sebacate moiety, most preferably said light stabilizer is a mixture of bis(1,2,2,6,6-pentamethyl-4-piperidyl)-sebacate and 1-(methyl)-8-(1,2,2,6,6-pentamethyl-4-piperidyl)-sebacate;
(k) preferably 0.01 - 1.0 wt%, more preferably 0.05 - 0.3 wt%, even more preferably 0.08 - 0.2 wt% most preferably 0.095 - 0.15 wt% surface additive, said surface additive preferably being a silicone-containing surface additive, more preferably a polydimethylsiloxane, most preferably a polyether-modified polydimethylsiloxane; and
(l) optionally 5 - 30 wt%, more preferably 10 - 25 wt%, most preferably 13 - 17 wt%, granular material having an average particle size in the range of 60 - 600 µm, wherein the granular material is preferably sand and wherein the wt% values of other components given herein are based on the coating composition without granular material.

### Kit of parts

As the primer coating composition according to the invention and the finisher coating composition according to the invention are ideally used together in the process of the invention, the present invention also concerns a kit of parts comprising the primer coating composition according to the invention as described above and the finisher coating composition according to the invention as described above. Both coating compositions are preferably conditioned in separate holders such as flasks, bottles, cans or aerosol sprays. These holders are preferably packaged together in a single wrapper or the association between the holders within the kit of parts is apparent by indices on the wrapper. Preferably, the holders are packaged in a single wrapper. Each of the holders containing a composition comprising a photoinitiator is preferably protected against UV light (i.e. transmits < 10 % of the UV light in sunlight), in order to prevent unwanted premature photopolymerisation.

Pigments may already be present in the coating compositions included in the kit of parts, or may be provided in separate holders to enable appropriate mixing of the coating compositions with the pigments to obtain the desired colour. Preferably, such holders containing pigments are also included in the kit of parts, but they may also be separately available, to give the user optimum freedom in preparing the desired colour. The pigments are preferably provided as pigment pastes, as those are more conveniently mixed with the coating compositions than powders. Likewise, the photoinitiator is preferably contained in the primer and finisher coating composition, although the photoinitiator may also be separately provided in a holder, which is either contained in the kit of parts or separately available, preferably contained in the kit of parts. Further components may be included in the kit of parts according to the invention, such as a UV source (e.g. a UV lamp), which conveniently emits UV light that activates the photoinitiator comprised in the primer and the finisher, instructions regarding how to perform the process according to the invention with use of the kit of parts and/or how to mix the pigments with the coating compositions to obtain appropriate coloured coatings without disrupting the UV curing process, and/or granular material, preferably having an average particle size in the range of 60 - 600 µm, for providing granular material to the coating in step (d) of the process according to the invention, as described further below. Alternatively, the finisher coating composition as present in the kit of parts according to the invention may already contain the granular material.

In a preferred embodiment, the primer coating composition contained in the kit of parts comprises a higher pigment content than the finisher coating composition contained in the kit of parts. Preferably, said higher pigment content is at least 10 % higher, more preferably at least 25 % higher, even more preferably 50 - 250 % higher, most preferably 100 - 150 % higher pigment content. Exemplary of a 100 % higher pigment content is a primer coating composition comprising 2 wt% pigment and a finisher coating composition comprising 1 wt% pigment. When the kit of parts is used in the process according to the invention, such an increased pigment content in the primer provides the greatest part of the colour of the opaque coating and the required amount of pigment in the finisher to ensure opaque coating may be reduced, which enables further optimization of the finisher, e.g. by addition of UV filters and light stabilizers. Including such additives in the finisher increases the lifetime of the coating and reduces undesirable effects like degradation and yellowing.

In a preferred embodiment, the kit of parts further comprises the additive according to the invention, typically contained in a separate holder. The additive according to the invention may be added to the primer coating composition before it is applied to a surface of the substrate, i.e. prior to step (a) of the process according to the invention. The addition of the additive to the primer of the invention imparts improved adherence properties to the primer coating composition, and thus the resulting coated substrate suffers from further reduced adherence problems. The additive according to the invention comprises an adherence improvement agent selected from the group consisting of isocyanate-functionalized resins, acid-functionalized resins, silane additives, polymeric isocyanates, mercaptane amines and mixtures thereof. The additive comprises, preferably consists of, 90 - 99.9 wt%, preferably 95 - 99.5 wt% of the adherence improvement agent and 0.1 - 10 wt%, preferably 0.5 - 5 wt% of a photoinitiator, based on total weight of the additive. The adherence improvement agent is preferably a isocyanate-functionalized resin, and the additive preferably comprises, more preferably consists of, 90 - 99.9 wt%, preferably 95 - 99.5 wt% of the isocyanate-functionalized resin and 0.1 - 10 wt%, preferably 0.5 - 5 wt% of a photoinitiator, based on total weight of the additive. Preferably the resin is an isocyanate-functionalized acrylic ester resin. Suitable resins to be used in the additive according to the invention include Laromer LR9000 (BASF) and Desmolux D100 (Allnex). In principle any photoinitiator may be used in the additive, but it is preferred that the same photoinitiator is used as in the primer. Most preferably, the additive, primer and the finisher all comprise the same photoinitiator. Thus, the additive preferably comprises a phosphine oxide photoinitiator, more preferably bis(2,4,6-trimethylbenzoyl)-phenylphosphine oxide. A preferred additive consists of about 99 wt% resin and about 1 wt% photoinitiator.

### Process

The invention also concerns a process for coating of a substrate, preferably for opaque coating of a substrate. The process of the invention includes the application of at least two layers of a UV-curable coating composition to a substrate. Both layers are cured by UV irradiation after application. Thus, the process according to the invention comprises the steps:
(a) applying a first layer of a liquid solvent-free UV-curable primer coating composition to a surface of the substrate;
(b) curing the first layer by irradiation with UV light;
(c) optionally applying and curing one or more further layers of a liquid solvent-free UV-curable coating composition on the cured first layer;
(d) providing a granular material, having an average particle size in the range of 60 - 600 µm, to the coating;
(e) applying a final layer of a liquid solvent-free UV-curable finisher coating composition on top of the cured first or further layer; and
(f) curing the final layer by irradiation with UV light.

Typically, each layer of coating that is applied to the substrate has a thickness of 10 - 600 µm, preferably 50 - 600 µm, more preferably 50 - 400 µm, even more preferably 60 - 400 µm, even more preferably 80 - 300 µm, most preferably 100 - 200 µm. Thicknesses 60 µm or higher are especially preferred, as such layers ensure complete coverage of surfaces that are not perfectly smooth, as often encountered during site-applied coating. The process according to the invention ensures that layers of such thickness may be efficiently applied, without zippering problems that are usually associated with such thick layers.

As describe above, the UV-curable coating compositions comprise 20 - 90 wt% UV-curable resin, 5 - 70 wt% filler, 0.1 - 10 wt% photoinitiator and less than 5 wt% solvent. The resin comprised in the finisher coating composition is an acrylate resin. Preferably, the coating compositions further comprise 0.1 - 5.0 wt% pigment. The UV-curable coating composition used in step (a), the optional further UV-curable coating composition of step (c) and the UV-curable coating composition used in step (e) may be the same composition, but preferably the latter composition is distinct from the first two. Preferably, the UV-curable primer coating composition used in step (a) is the primer coating composition according to the invention as described above. Preferably, the optionally used UV-curable coating composition used in step (c) is the primer coating composition according to the invention as described above. Preferably, the UV-curable coating finisher composition used in step (e) is the finisher coating composition according to the invention as described above. Most preferably, the UV-curable coating composition used in step (a) and, if used, the UV-curable coating compositions used in step (c) are the primer coating composition according to the invention as described above, and the UV-curable finisher coating composition used in step (e) is the finisher coating composition according to the invention as described above. The use of the primer according to the invention in step (a) and optionally step (c) is preferred to increase the adherence of the coating to the substrate. The use of the finisher according to the invention in step (e) is preferred to increase the (outside) durability of the coating during use. As known in the art, some components of the coating compositions according to the invention may be added at the latest moment prior to the application of step (a) or (e). Exemplary is the mixing in of the photoinitiator directly prior to application.

The process according to the invention may be used in any type of industry that may benefit from UV-curable coatings, especially opaque coatings, such as the automotive industry, telecommunications, electronics, graphic arts, metalworking, construction, glass and plastic decorating, etc. The substrate to be coated in the process of the invention may be any substrate that is suitable to be coated by UV-curable coatings, such as substrates made of concrete, wood, plastic (e.g. PVC), metal, glass, mineral material (e.g. anhydrite, stone, rock, brick), linoleum (including marmoleum and the like), asphalt, fibre-reinforced-plastic, paper, or substrates already containing a coating (for recoating). As the process according to the invention is particularly suitable to be performed outside, the process is preferably for site-applied coating, preferably outside coating. Preferably, the process to be employed in the construction industry. "Site-applied coating" refers to the coating of a substrate at the location of the substrate, such as in cases where it is impossible or not practical to move the substrate to a location specifically designed for coating. Site-applied coating occurs frequently in construction industry, where it is impossible to move a structure and substrates such as walls, floors, staircases and the like must be coated in their final position.

Preferably the substrate is made of concrete, wood, plastic (e.g. PVC), metal, glass, mineral material (e.g. anhydrite, stone, rock, brick), linoleum (including marmoleum and the like), asphalt, fibre-reinforced-plastic, paper, or substrates already containing a coating (for recoating), more preferably of concrete, mineral material or metal, even more preferably of anhydrite, concrete or stone, most preferably of concrete. In the context of the present invention, concrete is preferably defined as having a cement content of at least 10 wt%, more preferably 12 - 25 wt%. A particular type of concrete, which is particularly suitable to be coated with the process according to the invention is referred to in the art as "smooth concrete" or monolithic concrete.

Preferred substrates include floors (e.g. of factory halls, cold storage rooms, galleries in flats, barns), walls, staircases, stelcon plates, etc. Preferably, such substrates are located outside. Preferred floors are monolithic concrete floors, creeds and anhydrite cast floors. Floors to be coated with the process according to the present invention preferably have a compressive strength of at least 25 N/mm² after 28 days. For monolithic concrete floors, the compressive strength is preferably B25. For creeds, the compressive strength is preferably D30. For anhydrite cast floors, the compressive strength is preferably GD30. In view of the extremely fast curing, the process according to the invention is particularly suited for the coating of floors in public areas or areas which experience heavy traffic. Using a state of the art coating process, such heavy traffic should be closed down or rerouted for at least several days up to weeks, while the process according to the invention reduces this period to several hours. Moreover, the process according to the invention can be performed at reduced temperatures, such as -5 to 15 °C, preferably 0 - 10 °C, as common encountered in cold storage rooms. Thus, when the process according to the invention is used, the cold storage room does not to be put out of practice for a certain amount of time to allow warming up to room temperature. Instead, at the floor can be (re-)coated while the cold storage room remains at its operating temperature. Thus, in a preferred embodiment, the substrate is a floor of a cold storage room.

It is particularly preferred that the process according to the invention comprises a step of mixing a coating composition with the additive according to the invention to obtain the primer coating composition that is applied in step (a). In this respect, both the coating composition to which the additive is added as the resulting mixture of coating composition and additive may be referred to as the primer coating composition according to the present invention. The weight ratio in which the primer coating composition and the additive are mixed in order to obtain the primer that is applied in step (a) may be up to 1/3, more preferably 1/20 - 1/4, most preferably 1/10 - 1/5.

According to this embodiment, step (a) involves applying a first layer of primer coating composition, which is mixed with the additive, to a surface of the substrate. The additive according to the invention comprises an adherence improvement agent selected from the group consisting of isocyanate-functionalized resins, acid-functionalized resins, silane additives, polymeric isocyanates, mercaptane amines and mixtures thereof. The additive comprises, preferably consists of, 90 - 99.9 wt%, preferably 95 - 99.5 wt% of the adherence improvement agent and 0.1 - 10 wt%, preferably 0.5 - 5 wt% of a photoinitiator, based on total weight of the additive. The adherence improvement agent is preferably a isocyanate-functionalized resin, and the additive preferably comprises, more preferably consists of, 90 - 99.9 wt%, preferably 95 - 99.5 wt% of the isocyanate-functionalized resin and 0.1 - 10 wt%, preferably 0.5 - 5 wt% of a photoinitiator, based on total weight of the additive. The addition of the additive to the primer of the invention imparts improved adherence properties to the primer coating composition, and thus the resulting coated substrate suffers from further reduced adherence problems. The additional step of mixing the primer with the additive prior to application of the primer to a surface of the substrate is especially preferred for the coating of substrates that exhibit difficult adherence, such as concrete, linoleum, vinyl, plastic, fibre-reinforced-plastic, stone, rock, brick or metal, in particular concrete. Even smooth concrete is readily coated without severe pretreatment (only cleaning may be needed, as described here below) according to this embodiment.

The use of the additive as described herein is also particularly preferred for recoating applications. The resulting coating has excellent properties with respect to adherence, weathering resistance and scratching resistance. Without being bound to a theory, it is believed that the reactive functional groups present in the adherence improvement agent, such as isocyanate functional groups, carboxylic acid functional groups, silane functional groups or mercaptane functional groups, react with the surface of the substrate, e.g. the concrete, during curing to obtain excellent adherence. As such reactive functional groups, particularly isocyanate groups, are reactive towards water and some components that may be present in the primer, it is important that the adherence improvement agent is not included in the primer coating composition itself, but added just before step (a). Thus, it is preferred that the mixing of the additive and the primer occurs not more than 1 hour prior to step (a), more preferably not more than 30 minutes, most preferably not more than 10 minutes.

In a preferred embodiment, the process according to the invention further comprises a step of cleaning the substrate prior to step (a). Such cleaning is known in the art and preferably ensures that the substrate to be coated is essentially fat-free. The presence of fatty residues greatly hampers the application of the coating, especially in terms of adherence. Cleaning typically involves stripping, sweeping and/or treatment with a pressure washer (surface treatment with water with pressure of e.g. at least 100 bar). For relatively clean substrates, sweeping may suffice as cleaning step. For more intense cleaning, stripping may be applied, i.e. treatment with a stripper that removes fatty residues. Any stripping methods may be used, such as chemical stripping (treatment with a chemical that removes or dissolves fatty components), mechanical stripping (scraping or sanding) or heat stripping (using hot air, radiant heat, or steam). Removal of fatty residues may concur with removal of paint residues such as a no longer desired old coating, but it should be noted that removal of old coatings or other paint residues is not required in the process according to the invention, while sufficient adherence to the substrate (to the old coating present on the surface of the substrate) is obtained. As such, the process according to the invention is particularly suited for recoating.

Moreover, no further pretreatment of the surface is needed to ensure sufficient adherence, even not if the surface to be coated is a smooth concrete surface. Prior art processes for coating substrates that exhibit adherence problems, such as smooth concrete, require severe pretreatment such as scouring, etching and/or (abrasive) blasting. During etching, the concrete surface is treated with a strong acid, while abrasive blasting involves thrusting a stream of abrasive material against the surface under high pressure to roughen a smooth surface. Such pretreatment creates pores in the surface which would normally increase the extent adherence of the coating to the surface. In view of their severe nature, pretreatment as scouring, etching and/or abrasive blasting are not desired. The coating compositions as well as the process according to the invention, in view of their excellent adherence properties, is a major advantage over the prior art. Thus, in one particular embodiment, the process according to the invention does not comprise a step of scouring, a step of etching and a step of abrasive blasting of the surface prior to step (a).

In the context of the present invention, "opaque coating" refers to non-transparent coating (the process of coating a substrate or the resulting layer applied to a substrate). Thus, the original colour of the substrate is not visible after application of the at least two layers of a UV-curable coating composition. The colour of the coating may be any colour, including the original colour of the substrate. In this respect, black, white and all shades of grey are also considered colours. Preferably, the colour of the coating is orange, black, white or grey, more preferably orange or grey, most preferably grey. For the preferred embodiment of opaque coating of a substrate, it is required that the coating compositions comprise pigment as defined above. The skilled person appreciates that the pigment used in the coating should be adapted to the desired colour, and that the UV source and associated therewith the type of photoinitiator may suitable be adapted on the pigment used.

In the context of the invention, "coating a substrate" does not necessarily mean that the entire (outer) surface of the substrate must be covered with the coating, but that at least part of the substrate is. For example, in case the substrate is a staircase, only the treads may be coated using the process of the invention, although the entire staircase may also be coated accordingly. Thus, in steps (a), the first layer is applied to at least part of the substrate. In step (e), the final layer should be applied on the first layer after curing thereof, or on an optional further layer that is applied on the first layer and subsequently cured, for optimal results in terms of adherence and opaqueness. However, for some applications, it may be desired to apply the final layer only to part of the first or further layer, which is also encompassed in the present invention. It should thus be understood that applying the final layer in step (e) "on" the cured first layer does not mean that the final layer should be applied directly on the cured first layer, but that one or more further layers, preferably applied and cured layers of primer coating composition, may be located in between the first layer and the final layer. This is reflected in optional step (c). The final layer may thus also be applied in step (e) on a further layer. Naturally, the final layer is applied in step (e) on top of the last (i.e. outermost) cured layer, which may be the cured first layer or a cured further layer.

In the context of the present invention, more than two layers of UV-curable coating compositions may be applied on the substrate. In particular, several layers of the primer coating composition according to the invention may be applied and cured consecutively, after which the final layer of the finisher coating composition according to the invention is applied in step (e) and cured in step (f). Thus, in a preferred embodiment, one or more further layers of a UV-curable coating composition, preferably UV-curable primer coating composition, are applied to the cured first layer in step (c). Step (c) is preferably a repetition of steps (a) and (b) for one or more times. Thus, in case one further layer is applied in step (c), step (c) involves a step which can be viewed as a second step (a) or a step (a'), wherein a first further layer of the UV-curable primer coating composition is applied on the cured first layer, and a step which can be viewed as a second step (b) or a step (b'), wherein the applied first further layer is cured by irradiation with UV light. In case a second (or further) further layer is applied, step (c) also involves steps which can be viewed as a third (or further) step (a), or step (a") (or further), and as a third (or further) step (b), or step (b") (or further). The single occurrence of steps (a) and (b) is referred to as a "cycle". The process according to the invention thus involves at least one cycle of steps (a) and (b). Thus, applying two layers of primer coating before the finisher coating is applied is referred to as two cycles of steps (a) and (b), i.e. performing steps (a), (b) and (c), wherein step (c) involves steps (a') and (b')). Preferably, step (c) involves 0 - 4 additional cycles, more preferably 0 - 2 additional cycles, most preferably 11 additional cycle.

The process according to the invention further comprises a step (d) of providing granular material to the coating, which provides the coated substrate with antiskid characteristics. Further advantages of step (d) include a reduction in wrinkling of the cured coating layer and visual improvement of the final coating in view of reduced visibility of the curing lanes. The amount of granular material is preferably expressed in vol% based on the total volume of the coating composition used for the layer to which the granular material is applied without the granular material. Preferably, 3 - 15 vol% granular material is used, more preferably 5 - 10 vol%, most preferably 7.5 - 9 vol%. Providing granular material to the coating is preferably performed by applying granular material on an applied layer of primer coating composition (i.e. on the first or optional further layer) prior to curing thereof, or by using a coating composition containing granular material in step (a), (c) and/or (e), preferably in step (e).

Preferably, providing granular material to the coating is performed by applying granular material on an applied layer of primer coating composition prior to curing thereof. To this end, a layer of granular material is preferably applied on (e.g. sprinkled on) at least part of the applied first or optional further layer of UV-curable (primer) coating composition prior to being cured. Being embedded in the liquid UV-curable coating composition, the granular material will be baked in the cured layer and provides antiskid characteristics to the coated substrate. After curing, any remaining loose granular material may easily be removed from the cured layer (e.g. wiped off). The step of providing granular material to the coating may be applied between steps (a) and (b), or, in case one or more additional cycles are performed in step (c), between the applying and the curing of a further layer of a UV-curable (primer) coating composition, e.g. the granular material is sprinkled over an applied layer of primer. The applying of granular material in step (d) is preferably performed after applying the last (i.e. outermost) layer of primer and before curing thereof, such that the final layer is applied directly on top of the layer with the granular material. Such application of granular material to the applied final layer, i.e. in between step (e) and (f), is less preferred, as the extent of reduction in wrinkling was found to be greater when the providing of granular material was performed between steps (a) and (b) or within a step (c). When granular material is sprinkled over a primer layer after step (a) or within step (c) and baked into the primer during the curing of step (b) or within step (c), the application of at least one further layer (the finisher composition) ensures that the granular material is sufficiently embraced in the coating and adhered to the surface.

Alternatively, the granular material to be provided to the coating in step (d) is contained in the UV-curable coating composition, either in the primer or in the finisher coating composition, preferably in the finisher composition. The coating composition comprising the granular material is applied in step (a) or (c) or, preferably, (e). As such, providing granular material to the coating of step (d) is effectively combined with the curing of step (b) or (c) or, preferably, with the curing of step (f). Mixing of the granular material with the composition ensures sufficient adherence of the granular material without the need for applying at least one further layer. For a coarse or rough antiskid layer, the step of providing granular material is preferably applied by applying granular material on an applied layer of coating composition, e.g. by sprinkling the granular material between step (a) and (b) or optionally in step (c), while a finer antiskid layer is obtained when the step of providing granular material is combined with the curing of step (f). When the granular material is contained in a coating composition according to the invention, preferably the finisher coating composition, it is preferably present in 5 - 25 wt%, more preferably 10 - 20 wt%, most preferably 8 - 12 wt%, based on total weight of the coating composition.

Depending on the desired characteristics of the coated product, the layer of granular material may be applied to the entire layer of the UV-curable coating composition, or to part of the UV-curable coating composition. For example, only parts of a floor that are coated according to the present invention may be provided with antiskid characteristics, or only the treads of a staircase which is completely coated according to the present invention. UV curing is easily combined with providing granular material, and as such antiskid surfaces provided with an opaque coating are readily available using the present invention.

In the context of the present invention, "granular material" refers to any particulate material having a average particle diameter of 0.01 - 0.8 mm, preferably 0.05 - 0.8 mm, more preferably 0.06 - 0.6 mm, most preferably 0.06 - 0.2. In one embodiment, the average particle size is 0.01 - 0.4 mm, preferably 0.05 - 0.4 mm, more preferably 0.05 - 0.2 mm, even more preferably 0.08 - 0.2 mm, most preferably 0.08 - 0.12 mm. In an alternative embodiment, the average particle size is 0.05 - 0.8 mm (0.05 - 0.4 mm and 0.4 - 0.8 mm), preferably 0.06 - 0.6 mm (0.06 - 0.4 mm and 0.4 - 0.6 mm), most preferably 0.2 - 0.6 mm (0.2 - 0.4 mm and 0.4 - 0.6 mm). Especially using granular material with an average particle size of at least 0.05 mm or even 0.06 mm significantly reduces zippering. The granular material may be substantially spherical or rod-shaped. Generally, rod-shaped granular material may be somewhat smaller in size to obtain the same effect on zippering compared to spherical granular material. Thus, rod-shaped granular material preferably has an average diameter of 0.01 - 0.4 mm, preferably 0.05 - 0.2 mm, while spherical granular material preferably has an average diameter of 0.05 - 0.8 mm, preferably 0.2 - 0.6 mm. Such rod-shaped granular material typically has an average aspect ratio in the range of 1.5 - 20, preferably 3 - 10. It is preferred that the granular material is substantially spherical. The optimal average particle diameter of the granular material may also vary depending on the mode of providing granular material to the coating. In case the granular material is provided by applying the granular material on an applied layer of primer coating composition (i.e. on the first or optional further layer) prior to curing thereof ("sanding in"), the average particle size is preferably in the range of 0.2 - 0.6 mm, more preferably 0.2 - 0.4 mm. Such a particle size provides optimal protection against zippering and is easy to apply. In case the granular material is provided by using a coating composition containing granular material in step (a), (c) and/or (e), preferably in step (e), the average particle size is preferably in the range of 0.05 - 0.2 mm, more preferably 0.06 - 0.2 mm. Such a particle size provides ensures the coating composition, preferably the finisher coating composition, is still readily applied using a paint roller while zippering is still substantially avoided. Herein, average particle sizes are typically determined as D₅₀. Preferably, the granular material is selected from sand and other mineral materials, glass, thermoplastics (e.g. PP and/or PE), wood (e.g. chips), silicon carbide; more preferably a mineral material is used, most preferably sand. Most preferably Geba sand, Silvers and M32 or Dorsilit nr.9 is used. When sand is used as the granular material, the amount used is preferably 100 - 1000 g/m², more preferably 150 - 500 g/m², most preferably 200 - 250 g/m².

It is preferred that the UV-curable coating composition used in step (a) and in optional step (c) comprises a higher pigment content than the UV-curable coating composition used in step (e). Preferably, said higher pigment content is at least 10 % higher, more preferably at least 25 % higher, even more preferably 50 - 250 % higher, most preferably 100 - 150 % higher pigment content. Exemplary of a 100 % higher pigment content is the use of a primer coating composition comprising 2 wt% pigment in step (a) and a finisher coating composition comprising 1 wt% pigment in step (e). Using such an increased pigment content in the primer, the greatest part of the colour of the opaque coating originates from the primer and the required amount of pigment in the finisher to ensure opaque coating may be reduced, which enables further optimization of the finisher, e.g. by addition of UV filters and light stabilizers. Including such additives in the finisher increases the lifetime of the coating and reduces undesirable effects like degradation and yellowing.

Applying the UV-curable coating compositions in steps (a), (c) and (e) may be accomplished by any means known in the art. Typically, the coating is rolled, brushed or sprayed on the substrate, preferably rolled on the substrate. Steps (a), (c) and (e) of the process according the invention are preferably performed with use of self-feeding paint rollers. The use of self-feeding paint rollers to apply the UV-curable coating compositions enables swift and efficient application. Moreover, the coating compositions are exposed to the environment for the first time at the moment of application to the surface, which thus renders the use of self-feeding paint rollers particularly advantageous for outside site-applied coating, when environmental UV light may cause premature curing of the coating composition (e.g. in the paint tray). Alternatively, a paint tray and conventional rollers may also be used, in which case it is preferred that the coating compositions when still in a paint tray are shielded from environmental UV light by a foil of UV filtering material. Typically, each layer of coating that is applied to the substrate has a thickness of 10 - 600 µm, preferably 50 - 400 µm, most preferably 100 - 200 µm.

The irradiation performed in steps (b) and (f), and optionally in step (c), may be accomplished by any means known in the art, using any UV source as known in the art, such as long-wave UVA emitters (black lights), short wave UV lamps, gas discharge lamps (e.g. mercury lamp, gallium lamp, indium lamp), excimer lamps, ultraviolet LEDs and ultraviolet lasers. Preferably, a gas discharge lamp or an ultraviolet LED is used, most preferably a mercury lamp (or mercury-vapour lamp), especially when bis(2,4,6-trimethylbenzoyl)-phenylphosphine oxide is used as photoinitiator. UV as used herein is not strictly limited to invisible UV light of below 400 nm, and may include wavelengths in the visible range, especially in the violet, blue and green ranges, up to e.g. 500 nm or even 600 nm. Thus, the UV source preferably has a wavelength of emission of 100 - 600 nm, more preferably 200 - 400 nm, even more preferably 300 - 380 nm, most preferably 350 - 375 nm. Suitable means for irradiating include mobile curing equipment, conveyer belts, flood lamps, focused lamps. Especially for site-applied coating, the preferred means for irradiating is the use of mobile curing equipment, such as available from DecoRad (Floormate). Such mobile curing equipment typically cures a layer of coating composition with a speed of 0.5 - 10 m/min, preferably 0.8 - 5 m/min, most preferably 1.0 - 2.5 m/min. Although the UV source, the means for irradiation and the photoinitiator may differ between the UV-curable coating composition used in step (a) or (c) and the one used in step (f), for application efficiency it is preferred that those are the same in both coating compositions.

A major advantage of the process according to the invention for site-applied coating such as in the construction industry is the speed at which substrates can be coated. As exemplified in the examples, an entire staircase may be provided with an opaque coating within three hours, while conventional coating techniques would last several days. Importantly, a UV-cured layer, obtained in step (b) or (f) of the process according to the invention, is immediately available for further processing (e.g. application of a further layer), or may be walked on directly after curing. As such, the waiting time between application of separate layers is reduced from hours (or even days) for solvent evaporation-based curing (drying time) to instantaneously. Thus, in a preferred embodiment, the waiting time between step (b) and step (e), or, in case step (c) is performed, between step (b) and step (c) and between step (c) and step (e), is less than 30 minutes, more preferably less than 10 minutes, most preferably less than 5 minutes.

A further aspect of the invention concerns a substrate which is obtainable by the process of the invention, preferably which is obtained by the process of the invention. In other words, the invention concerns a substrate comprising a UV-cured coating, preferably an opaque UV-cured coating.

### Examples

### Example 1: Preparation of primer and finisher coating compositions.

A primer coating composition according to the invention is given in table 1. A finisher coating composition is given in table 2. Both compositions were prepared as common in the art (grinding and dispersing the components).

**Table 1: Exemplary primer coating composition (wt% based on total weight)**

| Component | |
|---|---|
| resin | 40.00 wt% polyester acrylate (Photomer 5429) |
| reactive diluent | 10.00 wt% nonylphenol [4EO] acrylate (Photomer 4003) |
| photoinitiator | 0.70 wt% bis(2,4,6-trimethylbenzoyl)-phenylphosphine oxide (Irgacure 819) |
| pigment | 2.00 wt% (mixture of 85 % white paste comprising about 50 wt% TiO₂ (Ti Pure R-960) and 15 % black paste comprising about 50 wt% black pigment (Printex G)) |
| filler | 40.00 wt% CaSiO₃ Wollastonite (Casiflux G38) |
| | 6.00 wt% CaCO₃ (Omyacarb 2-GU) |
| anti-settling agent | 1.00 wt% synthetic silica (Gasil 23F) |
| deaerator | 0.30 wt% silicon-free organic polymer (Byk 1791) |

**Table 2: Exemplary finisher coating composition (wt% based on total weight)**

| Component | |
|---|---|
| resin | 30.00 wt% urethane acrylate (Sartomer CN 989) |
| reactive diluent | 10.00 wt% Tripropylene glycoldiacrylate (TPGDA) 8.00 wt% Trimethylolpropane triacrylate (TMPTA) |
| photoinitiator | 2.00 wt% bis(2,4,6-trimethylbenzoyl)-phenylphosphine oxide (Irgacure 819) |
| | 6.00 wt% methyl benzoylformate (Irgacure MBF) |
| pigment | 1.00 wt% (mixture of 80 % TiO₂ (Ti Pure R-960), 20 % black pigment (Printex G)) |
| filler | 40.00 wt% CaSiO₃ Wollastonite (Casiflux G38) |
| anti-settling agent | 1.00 wt% synthetic silica (Gasil 23F) |
| deaerator | 0.30 wt% silicon-free organic polymer (Byk 1791) |
| dispersing agent | 0. 30 wt% acid-functional polymer (Disperbyk 111) |
| UV filter | 1.00 wt% hydroxyphenyl-triazine (Tinuvin 400) |
| light stabilizer | 0.30 wt% of a mixture of bis(1,2,2,6,6-pentamethyl-4-piperidinyl)-sebacate and 1-(methyl)-8-(1,2,2,6,6-pentamethyl-4-piperidinyl)-sebacate (Tinuvin 292) |
| surface additive | 0.10 wt% polyether-modified polydimethylsiloxane (Byk-UV 3500) |

### Example 2: Coating of a staircase

A heavily weathered concrete staircase, located outside, was coated using the process according to the invention. The only pretreatment involved brushing the staircase clean to remove dust and other loose matter. Using a long-pile paint roller, a primer coating composition according to the invention was applied to the entire surface of the staircase. Even though the sun was shining during application of the primer, application was achieved without problems. Using a mercury-vapour hand lamp, the primer was cured in minutes. Subsequently, a second layer of primer was applied to the only treads of the staircase. The second layer of primer was sanded in with Geba sand (particle size distribution of 0.06 - 0.2 mm), after which the second layer was cured with the mercury-vapour lamp. A final layer of a finisher coating composition according to the invention was applied to the entire surface of the staircase, on top of the one or two layers of cured primer. Finally, the finisher layer was cured with the same mercury-vapour lamp. Complete coating of the staircase, including pretreatment and applying and curing three layers of coating composition and sanding in was completed in 3 hours. Mechanical load (e.g. walking) was possible directly after completion of the coating procedure. Mechanical load is also possible after curing of the primer, if intermediate traffic is desired.

### Example 3: Coating of a gallery floor (flat)

An outside concrete gallery floor of a flat (area = 10 m²) was coated using the process according to the invention. The gallery was coated with an old antiskid polyurethane coating. Pretreatment involved cleaning the surface with a pressure washer and drying with hot air (gas burner) up to a moisture content of < 4 %. Using a short-pile paint roller on a pole, a primer coating composition according to the invention was applied to two third of the floor surface of the gallery. The roller tray was shielded from direct sunlight by a foil of UV filtering material. Application of the primer in the corners was performed with a broad brush. Application of the primer was achieved without problems. About half of the primer layer (i.e. one third of the floor area of the gallery) is sanded in with about 0.9 kg/m² Geba sand (particle size distribution of 0.06 - 0.2 mm). Using a mercury-vapour lamp mounted on a mobile curing system (Decorad) using a speed of 9 m/min, the first layer of primer was cured. Visual inspection of the cured primer coating revealed no adherence or shrink problems. A final layer of a finisher coating composition according to the invention was applied to the entire floor surface of the gallery, for two thirds on top of the layer of cured primer and for one third directly on top of the pretreated gallery floor. Application of the finisher layer was performed with a 2K roller and a roller tray shielded from direct sunlight by a foil of UV filtering material. Finally, the finisher layer was cured with the same mobile curing system set at a speed of 4 m/min. Complete coating of the gallery floor, including pretreatment and applying, curing and sanding in was completed in approximately 2 hours. Mechanical load (e.g. walking) was possible directly after completion of the coating procedure. Mechanical load is also possible after curing of the primer, if intermediate traffic is desired.

Optimal results in terms of adherence, especially long-term adherence, and outside durability of the coating were obtained when the primer according to the invention was applied as first layer. When only the finisher was applied, the adherence to the substrate was insufficient for appropriate coating of the floor. When no sand was used, the coated floor exhibited zippering and the curing lanes were visible, which render the applied coating visually unacceptable. Also the skid resistance was unacceptably low when no sand was used, which detriments the user comfort. Using the primer and finisher coating compositions according to the invention in combination with a step of applying granular material, ensures optimal processing conditions (minimal pretreatment required, swift application time, minimal disturbance for traffic) and optimal coating results, in terms of adherence, outside durability and user comfort).

### Example 4: Coating the floor of a cold storage room

A smooth monolithic concrete floor of a cold storage room (area = 25 m²) was coated using the process according to the invention, while the storage room was in use at a temperature of 5 °C. The gallery was covered with an old epoxy coating. Pretreatment involved sand blasting. A primer coating composition according to the invention was applied to the floor surface using a wiper and subsequently a short-pile 25 cm paint roller on a pole. Application of the primer was achieved without problems. Using a mercury-vapour lamp mounted on a mobile curing system (Decorad) using a speed of 6 m/min, the first layer of primer was cured. Visual inspection of the cured primer coating revealed no adherence or shrink problems. A second layer of primer was then applied on top of the cured first layer and cured, as described for the first layer. A final layer of a finisher coating composition according to the invention was applied on top of the cured second layer. The finisher coating composition contained 15 wt% granular material (Geba sand, D₅₀ = 103 µm). Application of the finisher layer was performed with a Professional Plus roller (10 cm wide and 20 mm diameter) from REA. Finally, the finisher layer was cured with the same mobile curing system set at a speed of 4 m/min. After curing of the final layer, the coated floor was immediately chemically and mechanically loadable.

## Claims

1. A process for coating a substrate, comprising:
(a) applying a first layer of a liquid solvent-free UV-curable primer coating composition to a surface of the substrate;
(b) curing the first layer by irradiation with UV light;
(c) optionally applying and curing one or more further layers of a liquid solvent-free UV-curable coating composition onto the cured first layer;
(d) providing a granular material, having an average particle size in the range of 60 - 600 µm, to the coating;
(e) applying a final layer of a liquid solvent-free UV-curable finisher coating composition on top of the cured first or further layer; and
(f) curing the final layer by irradiation with UV light,
wherein the coating compositions comprise 20 - 90 wt% UV-curable resin, 5 - 70 wt% filler, 0.1 - 10 wt% photoinitiator and less than 5 wt% solvent, based on total weight of the coating compositions, wherein the UV-curable resin of the finisher coating composition is an acrylate resin.

2. The process according to claim 1, wherein the surface is made of concrete, wood, plastic (e.g. PVC), metal, glass, mineral material (e.g. anhydrite, stone, rock, brick), linoleum (including marmoleum and the like), asphalt, fibre-reinforced-plastic, paper, or substrates already containing a coating (for recoating), preferably the surface is made of concrete.

3. The process according to claim 1 or 2, wherein the coating is a site-applied coating of the substrate which cannot be moved to a location specifically designed for coating, preferably wherein the method is performed outside.

4. The process according to any one of claims 1-3, wherein the UV-curable primer coating compositions further comprise 0.1 - 5.0 wt% pigment, preferably wherein the UV-curable primer coating composition comprises 1.5 - 2.5 wt% pigment and the UV-curable finisher coating composition comprises 0.5 - 1.5 wt% pigment.

5. The process according to any one of the preceding claims, wherein the primer coating composition is mixed with an additive composition prior to step (a), wherein the additive composition comprises 90 - 99.9 wt% of an adherence improvement agent selected from the group consisting of isocyanate-functionalized resins, acid-functionalized resins, silane additives, polymeric isocyanates, mercaptane amines and mixtures thereof, and 0.1 - 10 wt% of a photoinitiator, based on total weight of the additive.

6. The process according to any one of claims 1-5, wherein the waiting time between steps (b) and (c) is less than 30 minutes, preferably less than 10 minutes and/or wherein each layer applied to the substrate has a thickness of 10 - 600 µm.

7. The process according to any one of claims 1-6, wherein step (d) is performed by applying granular material on the first or optional further layer prior to curing thereof, or by using a finisher coating composition containing granular material in step (e), preferably wherein step (d) is performed by applying granular material on the last of said first and optional further layers prior to curing thereof.

8. The process according to any one claims 1-7, wherein one or more further layers of a UV-curable coating composition, preferably primer coating composition, are applied and subsequently cured by irradiation with UV light in step (c).

9. A liquid UV-curable coating composition comprising 20 - 90 wt% UV-curable resin, 0.1 - 10 wt% photoinitiator, 5 - 70 wt% filler and less than 5 wt% solvent, based on total weight of the composition, wherein the filler comprises rod-shaped granules having a length-to-diameter ratio of at least 1.5 and an average particle diameter of 10 - 200 µm.

10. The coating composition according to claim 9, wherein the coating composition is a primer coating composition which preferably further comprises 0.5 - 5.0 wt% pigment, or wherein the coating composition is a finisher coating composition which preferably further comprises 0.1 - 3.0 wt% pigment, and wherein the resin is a UV-curable acrylate resin.

11. The coating composition according to claim 9 or 10, comprising 10 - 60 wt%, preferably 20 - 50 wt% of the filler.

12. The coating composition according to any one of claims 9 - 11, wherein the photoinitiator comprises a phosphine oxide initiator.

13. Kit of parts, comprising a primer coating composition, a finisher coating composition and granular material having an average particle size in the range of 60 - 600 µm, wherein the primer coating composition is a liquid UV-curable coating composition comprising 20 - 90 wt% UV-curable resin, 0.1 - 10 wt% photoinitiator, 5 - 70 wt% filler and less than 5 wt% solvent, based on total weight of the composition, and the finisher coating composition is a liquid UV-curable coating composition comprising 20 - 90 wt% UV-curable resin, 0.1 - 10 wt% photoinitiator, 5 - 70 wt% filler and less than 5 wt% solvent, based on total weight of the composition.

14. Kit of parts according to claim 13, further comprising an additive composition comprising 90 - 99.9 wt% of an adherence improvement agent selected from the group consisting of isocyanate-functionalized resins, acid-functionalized resins, silane additives, polymeric isocyanates, mercaptane amines and mixtures thereof, and 0.1 - 10 wt% of a photoinitiator, based on total weight of the additive.

15. Kit of parts according to claim 13 or 14, wherein the primer coating composition further comprises 0.5 - 5.0 wt% pigment and wherein the resin is a UV-curable acrylate resin, and/or wherein the finisher coating composition further comprises 0.1 - 3.0 wt% pigment and wherein the resin is a UV-curable acrylate resin.

16. Kit of parts according to any one of claims 13 - 15, wherein the coating compositions comprise 10 - 60 wt%, preferably 20 - 50 wt% of a filler comprises rod-shaped granules having a length-to-diameter ratio of at least 1.5 and an average particle diameter of 10 - 200 µm.

17. Kit of parts according to any one of claims 13 - 16, wherein the photoinitiator comprises a phosphine oxide initiator.

18. A coated substrate obtainable by the process according to any one of claims 1 - 8.

## Patentansprüche

1. Verfahren zur Beschichtung eines Substrats, das aufweist:
(a) Auftragen einer ersten Schicht einer flüssigen lösungsmittelfreien UV-härtenden Grundierbeschichtungszusammensetzung auf eine Oberfläche des Substrats;
(b) Härten der ersten Schicht durch Belichtung mit UV-Licht;
(c) optionales Auftragen und Härten einer oder mehrerer weiterer Schichten einer flüssigen lösungsmittelfreien UV-härtenden Beschichtungszusammensetzung auf der gehärteten ersten Schicht;
(d) Versehen der Beschichtung mit einem Granulatmaterial, das eine mittlere Teilchengröße in dem Bereich von 60 - 600 µm hat;
(e) Auftragen einer letzten Schicht einer flüssigen lösungsmittelfreien UV-härtenden Fertigstellungsbeschichtungszusammensetzung auf der gehärteten ersten oder weiteren Schicht; und
(f) Härten der letzten Schicht durch Belichtung mit UV-Licht,
wobei die Beschichtungszusammensetzungen 20 - 90 Gew.-% UV-härtendes Harz, 5 - 70 Gew.-% Füllstoff, 0,1 - 10 Gew.-% Photoinitiator und weniger als 5 Gew.-% Lösungsmittel basierend auf dem Gesamtgewicht der Beschichtungszusammensetzungen aufweisen, wobei das UV-härtende Harz der Fertigstellungsbeschichtungszusammensetzung ein Acrylharz ist.

2. Verfahren gemäß Anspruch 1, wobei die Oberfläche aus Beton, Holz, Plastik (z.B. PVC), Metall, Glas, mineralischem Material (z.B. Anhydrit, Stein, Fels, Ziegel), Linoleum (einschließlich Marmoleum und Ähnlichem), Asphalt, faserverstärktem Plastik, Papier oder Substraten, die bereits eine Beschichtung (zum Neubeschichten) beinhalten, gefertigt ist, vorzugsweise ist die Oberfläche aus Beton gefertigt.

3. Verfahren gemäß Anspruch 1 oder 2, wobei die Beschichtung eine vor Ort angewandte Beschichtung des Substrats ist, das nicht zu einem speziell zum Beschichten konzipierten Ort bewegt werden kann, wobei das Verfahren vorzugsweise draußen ausgeführt wird.

4. Verfahren gemäß einem der Ansprüche 1 - 3, wobei die UV-härtenden Grundierbeschichtungszusammensetzungen weiter 0,1 - 5,0 Gew.-% Farbstoff aufweisen, wobei vorzugsweise die UV-härtende Grundierbeschichtungszusammensetzung 1,5 - 2,5 Gew.-% Farbstoff und die UV-härtende Fertigstellungsbeschichtungszusammensetzung 0,5 - 1,5 Gew.-% Farbstoff aufweist.

5. Verfahren gemäß einem der vorangegangen Ansprüche, wobei die Grundierbeschichtungszusammensetzung vor Schritt (a) mit einer zusätzlichen Zusammensetzung vermischt wird, wobei die zusätzliche Zusammensetzung 90 - 99,9 Gew.-% von einem haftungsverbessernden Wirkstoff aufweist, der aus der Gruppe gewählt ist, die aus Isocyanat-funktionalisierten Harzen, Säure-funktionalisierten Harzen, Silanzusätzen, polymeren Isocyanaten, Mercaptanaminen und deren Gemischen besteht, sowie 0,1 - 10 Gew.-% von einem Photoinitiator basierend auf dem Gesamtgewicht des Zusatzes.

6. Verfahren gemäß einem der Ansprüche 1 - 5, wobei die Wartezeit zwischen den Schritten (b) und (c) kürzer als 30 Minuten ist, vorzugweise kürzer als 10 Minuten, und/oder wobei jede Schicht, die auf das Substrat aufgetragen wird, eine Dicke von 10 - 600 µm hat.

7. Verfahren gemäß einem der Ansprüche 1 - 6, wobei Schritt (d) durch Auftragen des Granulatmaterials auf der ersten oder optionalen weiteren Schicht vor deren Härten ausgeführt wird oder durch Verwenden einer Fertigstellungsbeschichtungszusammensetzung, die Granulatmaterial beinhaltet, in Schritt (e), wobei Schritt (d) vorzugsweise durch Auftragen des Granulatmaterials auf der letzten der ersten und optionalen weiteren Schichten vor deren Härten ausgeführt wird.

8. Verfahren gemäß einem der Ansprüche 1 - 7, wobei eine oder mehrere weitere Schichten einer UV-härtenden Beschichtungszusammensetzung, vorzugsweise einer Grundierbeschichtungszusammensetzung, aufgetragen werden und anschließend durch Belichtung mit UV-Licht in Schritt (c) gehärtet werden.

9. Flüssige UV-härtende Beschichtungszusammensetzung, die 20 - 90 Gew.-% UV-härtendes Harz, 0,1 - 10 Gew.-% Photoinitiator, 5 - 70 Gew.-% Füllstoff und weniger als 5 Gew.-% Lösungsmittel basierend auf dem Gesamtgewicht der Zusammensetzung aufweist, wobei der Füllstoff stäbchenförmiges Granulat aufweist, das ein Länge-zu-Durchmesser-Verhältnis von wenigstens 1,5 und einen gemittelten Teilchendurchmesser von 10 - 200 µm hat.

10. Beschichtungszusammensetzung gemäß Anspruch 9, wobei die Beschichtungszusammensetzung eine Grundierbeschichtungszusammensetzung ist, die vorzugsweise weiter 0,5 - 5,0 Gew.-% Farbstoff aufweist, oder wobei die Beschichtungszusammensetzung eine Fertigstellungsbeschichtungszusammensetzung ist, die vorzugsweise weiter 0,1 - 3,0 Gew.-% Farbstoff aufweist, und wobei das Harz ein UV-härtendes Acrylharz ist.

11. Beschichtungszusammensetzung gemäß Anspruch 9 oder 10, die 10 - 60 Gew.-%, vorzugsweise 20 - 50 Gew.-%, von dem Füllstoff aufweist.

12. Beschichtungszusammensetzung gemäß einem der Ansprüche 9-11, wobei der Photoinitiator einen Phosphinoxidinitiator aufweist.

13. Satz von Teilen, der eine Grundierbeschichtungszusammensetzung, eine Fertigstellungsbeschichtungszusammensetzung und Granulatmaterial aufweist, das eine mittlere Teilchengröße in dem Bereich von 60 - 600 µm hat, wobei die Grundierbeschichtungszusammensetzung eine flüssige UV-härtende Beschichtungszusammensetzung ist, die 20 - 90 Gew.-% UV-härtendes Harz, 0,1 - 10 Gew.-% Photoinitiator, 5 - 70 Gew.-% Füllstoff und weniger als 5 Gew.-% Lösungsmittel basierend auf dem Gesamtgewicht der Zusammensetzung aufweist, und die Fertigstellungsbeschichtungszusammensetzung eine flüssige UV-härtende Beschichtungszusammensetzung ist, die 20 - 90 Gew.-% UV-härtendes Harz, 0,1 - 10 Gew.-% Photoinitiator, 5 - 70 Gew.-% Füllstoff und weniger als 5 Gew.-% Lösungsmittel basierend auf dem Gesamtgewicht der Zusammensetzung aufweist.

14. Satz von Teilen gemäß Anspruch 13, der weiter eine zusätzliche Zusammensetzung aufweist, die 90 - 99,9 Gew.-% von einem haftungsverbessernden Wirkstoff aufweist, der aus der Gruppe gewählt ist, die aus Isocyanat-funktionalisierten Harzen, Säure-funktionalisierten Harzen, Silanzusätzen, polymeren Isocyanaten, Mercaptanaminen und deren Gemischen besteht, sowie 0,1 - 10 Gew.-% von einem Photoinitiator basierend auf dem Gesamtgewicht des Zusatzes.

15. Satz von Teilen gemäß Anspruch 13 oder 14, wobei die Grundierbeschichtungszusammensetzung weiter 0,5 - 5,0 Gew.-% Farbstoff aufweist und wobei das Harz ein UV-härtendes Acrylharz ist und/oder wobei die Fertigstellungsbeschichtungszusammensetzung weiter 0,1 - 3,0 Gew.-% Farbstoff aufweist und wobei das Harz ein UV-härtendes Acrylharz ist.

16. Satz von Teilen gemäß einem der Ansprüche 13-15, wobei die Beschichtungszusammensetzungen 10 - 60 Gew.-%, vorzugweise 20 - 50 Gew.-% von einem Füllstoff aufweisen, der stäbchenförmiges Granulat aufweist, das ein Länge-zu-Durchmesser-Verhältnis von wenigstens 1,5 und einen gemittelten Teilchendurchmesser von 10-200 µm hat.

17. Satz von Teilen gemäß einem der Ansprüche 13 - 16, wobei der Photoinitiator einen Phosphinoxidinitiator aufweist.

18. Beschichtetes Substrat, das durch das Verfahren gemäß einem der Ansprüche 1 - 8 erhältlich ist.

## Revendications

1. Procédé pour revêtir un substrat, comprenant les étapes consistant à :
(a) appliquer une première couche d'une composition de revêtement d'apprêt liquide sans solvant durcissable par UV sur une surface du substrat ;
(b) durcir la première couche par irradiation avec une lumière UV ;
(c) facultativement appliquer et durcir une ou plusieurs couches supplémentaires d'une composition de revêtement liquide sans solvant durcissable par UV sur la première couche durcie ;
(d) fournir un matériau granulaire, ayant une taille de particule moyenne dans la plage de 60 à 600 µm, au revêtement ;
(e) appliquer une couche finale d'une composition de revêtement de finition liquide sans solvant durcissable par UV sur le dessus de la première ou de la couche supplémentaire durcie ; et
(f) durcir la couche finale par irradiation avec une lumière UV,
dans lequel les compositions de revêtement comprennent de 20 à 90 % en poids de résine durcissable par UV, de 5 à 70 % en poids de charge, de 0,1 à 10 % en poids de photo-initiateur et moins de 5 % en poids de solvant, sur la base du poids total des compositions de revêtement, dans lequel la résine durcissable par UV de la composition de revêtement de finition est une résine acrylate.

2. Procédé selon la revendication 1, dans lequel la surface est réalisée en béton, bois, plastique (par exemple PVC), métal, verre, matériau minéral (par exemple anhydrite, pierre, roche, brique), linoléum (y compris marmoléum et analogue), asphalte, plastique renforcé de fibres, papier, ou substrats contenant déjà un revêtement (pour recouvrement), de préférence la surface est en béton.

3. Procédé selon la revendication 1 ou 2, dans lequel le revêtement est un revêtement appliqué sur site du substrat qui ne peut pas être déplacé vers un emplacement spécifiquement conçu pour le revêtement, de préférence dans lequel le procédé est effectué à l'extérieure.

4. Procédé selon l'une quelconque des revendications 1 à 3, dans lequel les compositions de revêtement d'apprêt durcissables par UV comprennent en outre de 0,1 à 5,0 % en poids de pigment, de préférence dans lequel la composition de revêtement d'apprêt durcissable par UV comprend de 1,5 à 2,5 % en poids de pigment et la composition de revêtement de finition durcissable par UV de finition comprend de 0,5 à 1,5 % en poids de pigment.

5. Procédé selon l'une quelconque des revendications précédentes, dans lequel la composition de revêtement d'apprêt est mélangée avec une composition d'additif avant l'étape (a), dans lequel la composition d'additif comprend de 90 à 99,9 % en poids d'un agent d'amélioration d'adhérence choisi dans le groupe consistant en des résines à fonction isocyanate, des résines à fonction acide, des additifs au silane, des isocyanates polymères, des mercaptane-amines et des mélanges de ceux-ci, et de 0,1 à 10 % en poids d'un photo-initiateur, sur la base du poids total de l'additif.

6. Procédé selon l'une quelconque des revendications 1 à 5, dans lequel le temps d'attente entre les étapes (b) et (c) est inférieur à 30 minutes, de préférence inférieur à 10 minutes et/ou dans lequel chaque couche appliquée sur le substrat a une épaisseur de 10 à 600 µm.

7. Procédé selon l'une quelconque des revendications 1 à 6, dans lequel l'étape (d) est effectuée en appliquant un matériau granulaire sur la première couche ou une couche supplémentaire facultative avant son durcissement, ou en utilisant une composition de revêtement de finition contenant du matériau granulaire à l'étape (e), de préférence dans lequel l'étape (d) est effectuée en appliquant un matériau granulaire sur la dernière desdites première et couches supplémentaires facultatives avant de les durcir.

8. Procédé selon l'une quelconque des revendications 1 à 7, dans lequel une ou plusieurs couches supplémentaires d'une composition de revêtement durcissable par UV, de préférence une composition de revêtement d'apprêt, sont appliquées et durcies ensuite par irradiation avec une lumière UV à l'étape (c).

9. Composition de revêtement liquide durcissable par UV comprenant de 20 à 90 % en poids de résine durcissable par UV, de 0,1 à 10 % en poids de photo-initiateur, de 5 à 70 % en poids de charge et moins de 5 % en poids de solvant, sur la base du poids total de la composition, dans laquelle la charge comprend des granulés en forme de bâtonnet ayant un rapport longueur/diamètre d'au moins 1,5 et un diamètre de particule moyen de 10 à 200 µm.

10. Composition de revêtement selon la revendication 9, dans laquelle la composition de revêtement est une composition de revêtement d'apprêt qui comprend en outre de préférence de 0,5 à 5,0 % en poids de pigment, ou dans laquelle la composition de revêtement est une composition de revêtement de finition qui comprend en outre de préférence de 0,1 à 3,0 % en poids de pigment, et dans laquelle la résine est une résine acrylate durcissable par UV.

11. Composition de revêtement selon la revendication 9 ou 10, comprenant de 10 à 60 % en poids, de préférence de 20 à 50 % en poids de la charge.

12. Composition de revêtement selon l'une quelconque des revendications 9 à 11, dans laquelle le photo-initiateur comprend un initiateur d'oxyde de phosphine.

13. Kit de pièces, comprenant une composition de revêtement d'apprêt, une composition de revêtement de finition et un matériau granulaire ayant une taille de particule moyenne dans la plage de 60 à 600 µm, dans lequel la composition de revêtement d'apprêt est une composition de revêtement liquide durcissable par UV comprenant de 20 à 90 % en poids de résine durcissable par UV, de 0,1 à 10 % en poids de photo-initiateur, de 5 à 70 % en poids de charge et moins de 5 % en poids de solvant, sur la base du poids total de la composition, et la composition de revêtement de finition est une composition de revêtement liquide durcissable par UV comprenant de 20 à 90 % en poids de résine durcissable par UV, de 0,1 à 10 % en poids de photo-initiateur, de 5 à 70 % en poids de charge et moins de 5 % en poids de solvant, sur la base du poids total de la composition.

14. Kit de pièces selon la revendication 13, comprenant en outre une composition d'additif comprenant de 90 à 99,9 % en poids d'un agent d'amélioration d'adhérence choisi dans le groupe consistant en des résines à fonction isocyanate, des résines à fonction acide, des additifs au silane, des isocyanates polymères, des mercaptane-amines et des mélanges de ceux-ci, et de 0,1 à 10 % en poids d'un photo-initiateur, sur la base du poids total de l'additif.

15. Kit de pièces selon la revendication 13 ou 14, dans lequel la composition de revêtement d'apprêt comprend en outre de 0,5 à 5,0 % en poids de pigment et dans lequel la résine est une résine d'acrylate durcissable par UV et/ou dans lequel la composition de revêtement de finition comprend en outre de 0,1 à 3,0 % en poids de pigment et dans lequel la résine est une résine acrylate durcissable par UV.

16. Kit de pièces selon l'une quelconque des revendications 13 à 15, dans lequel les compositions de revêtement comprennent de 10 à 60 % en poids, de préférence de 20 à 50 % en poids d'une charge comprenant des granulés en forme de tige ayant un rapport longueur/diamètre d'au moins 1,5 et un diamètre de particule moyen de 10 à 200 µm.

17. Kit de pièces selon l'une quelconque des revendications 13 à 16, dans laquelle le photo-initiateur comprend un initiateur d'oxyde de phosphine.

18. Substrat revêtu pouvant être obtenu par le procédé selon l'une quelconque des revendications 1 à 8.
